# EUROPÄISCHE PATENTANMELDUNG

(11) **EP 1 995 104 A2**
(43) Veröffentlichungstag der Anmeldung: **26.11.2008**
(21) Anmeldenummer: 08450081.8
(22) Anmeldetag: 16.05.2008
(51) Int. Cl.: B60K 15/077

(54) **Kraftstoffank für ein Fahrzeug**

(30) Priorität: 16.05.2007 AT 3152007 U; 22.10.2007 AT 6482007 U
(71) Anmelder: Alutech Gesellschaft m.b.H., 5651 Lend (AT)
(72) Erfinder: Lerch Andreas, 5651 Lend (AT)
(74) Vertreter: Weiser, Andreas

(57) **Zusammenfassung**

Ein Kraftstofftank (1) für ein Fahrzeug, mit mindestens einer Schwallwand (4, 5) in seinem Inneren, die eine mit einem Rückschlagventil (7') versehene Öffnung (6) aufweist, wobei das Rückschlagventil (7' ein Dichtelement (19) aufweist, das sich in einer Hülse (11) zwischen einem Ventilsitz (21) und einem davon entfernten Rückhalt (24) bewegen kann, welche Hülse (11) in oder an der Öffnung (6) verankert ist, zeichnet sich dadurch aus, daß das Dichtelement ein Ventilteller (19) ist, der von einer in einem Lagerelement (24) der Hülse (11) axialbeweglich gelagerten Stange (20) geführt ist und gegen die als Ventilsitz wirkende Stirnseite (21) der Hülse (11), gegebenenfalls unter Zwischenschaltung einer Dichtung (22), abdichten kann.

## Beschreibung

Die vorliegende Erfindung betrifft einen Kraftstofftank für ein Fahrzeug, mit mindestens einer Schwallwand in seinem Inneren, die eine mit einem Rückschlagventil versehene Öffnung aufweist, wobei das Rückschlagventil ein Dichtelement aufweist, das sich in einer Hülse zwischen einem Ventilsitz und einem davon entfernten Rückhalt bewegen kann, welche Hülse in oder an der Öffnung verankert ist.

Aus der WO 2004/009391 A1 ist ein Kraftstofftank dieser Art bekannt, bei welchem das Rückschlagventil eine Ventilklappe ist, die oberhalb der Schwallwandöffnung angelenkt ist und sich schwerkraftgesteuert vor die Öffnung legt. Die Montage einer solchen Ventilklappe ist aufwendig und überdies wird damit keine besonders gute Abdichtung erzielt. Eine andere Art von Rückschlagventilen ist beispielsweise aus der JP 58-124058 A bekannt, bei welcher das Dichtelement eine in der Hülse geführte Dichtkugel ist, welche nur geringe Dichtwirkung entfaltet.

Es ist Aufgabe der Erfindung, einen Kraftstofftank mit Schwallwand und Rückschlagventil zu schaffen, welcher die genannten Nachteile überwindet.

Dieses Ziel wird mit einem Kraftstofftank der eingangs genannten Art erreicht, der sich gemäß der Erfindung dadurch auszeichnet, daß das Dichtelement ein Ventilteller ist, der von einer in der Hülse axialbeweglich gelagerten Stange geführt ist und gegen die als Ventilsitz wirkende Stirnseite der Hülse, gegebenenfalls unter Zwischenschaltung einer Dichtung, abdichten kann. Auf diese Weise wird ein durch Strömungs- und Schwerkrafteinwirkung besonders gut steuerbares und in der Schließstellung besonders gut abdichtendes Schwallwand-Rückschlagventil geschaffen, das überdies einfach aufgebaut und aufgrund seiner Hülsenkonstruktion leicht montierbar ist.

Bevorzugt kann der Ventilteller durch eine auf die Stange aufgezogene Feder in die Schließstellung vorgespannt sein, um die Abdichtung noch weiter zu verbessern.

Besonders vorteilhaft ist es, wenn die Hülse in die Öffnung eingeschraubt, verschweißt oder eingepreßt wird. Das Rückschlagventil kann auf diese Weise in einem einzigen Schritt rasch und sicher in der Schwallwand verankert werden und erzielt gleichzeitig eine gute Abdichtung.

Die Erfindung wird nachstehend anhand von in den beigeschlossenen Zeichnungen dargestellten Ausführungsbeispielen näher erläutert. In den Zeichnungen zeigen
Fig. 1 den Kraftstofftank der Erfindung im Schnitt;
die Fig. 2 und 3 zwei Varianten eines Rückschlagventils im Schnitt; und
die Fig. 4 und 5 eine erfindungsgemäße Ausführungsform des Rückschlagventils im Schnitt in der Schließstellung (Fig. 4) bzw. der Offenstellung (Fig. 5).

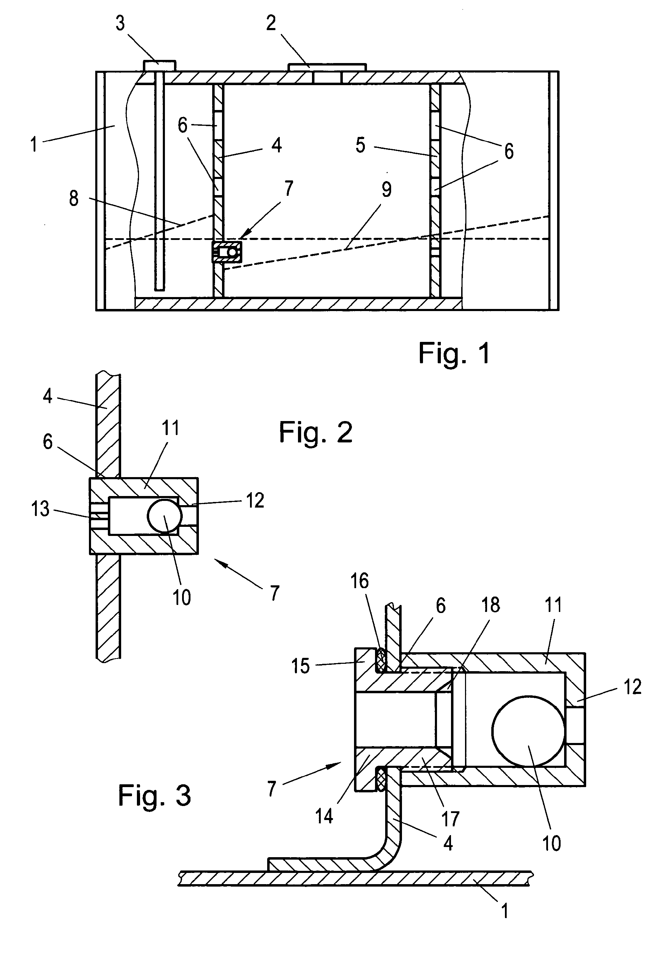

Fig. 1 zeigt einen Kraftstofftank 1 für ein (nicht dargestelltes) Fahrzeug mit einem Einfüllstutzen 2 und einer Entnahmeeinheit 3, über welchen Kraftstoff in Bodennähe des Kraftstofftanks 1 entnommen wird, wie dem Fachmann bekannt.

Der Kraftstofftank 1 ist durch zwei senkrechte Schwallwände 4, 5 in Abschnitte unterteilt. Die Schwallwände 4, 5 sind jeweils mit Öffnungen 6 versehen. Jene Öffnung 6, die dem Entnahmeort der Entnahmeeinheit 3 am nächsten liegt, ist mit einem Rückschlagventil 7 ausgestattet.

Das Rückschlagventil 7 schließt - schwerkraftbedingt und/oder strömungsbedingt - beim Beschleunigen des Kraftstofftanks 1 nach links bzw. Kippen im Uhrzeigersinn in Fig. 1; in Ruhelage, beim Beschleunigen nach rechts bzw. Kippen gegen den Uhrzeigersinn ist das Rückschlagventil 7 geöffnet. Dadurch ist sichergestellt, daß beim Anfahren, Bremsen, Bergauf- oder Bergabfahren auch bei geringer Tankfüllung stets ein ausreichendes Flüssigkeitsniveau 8 in dem die Entnahmeeinheit 3 enthaltenden Abschnitt des Kraftstofftanks 1 erhalten bleibt.

Überdies kann das Rückschlagventil 7 auch dazu verwendet werden, den Tank bei der Erstauslieferung des Fahrzeuges nur in jenem Abschnitt, wo die Entnahmeeinheit 3 liegt, zu befüllen, was Kosten für den Fahrzeughersteller spart, insbesondere bei der "Hucke-Pack"-Auslieferung des Fahrzeugs, wenn dessen Fahrzeugkabine nach unten und das Heck nach oben zeigt und die Entnahme aus dem Kraftstoffbehälter im hinteren Bereich liegt. Weiters kann es auch vorkommen, daß das Fahrzeug auf einer schiefen Ebene für längere Zeit abgestellt wird.

Fig. 2 zeigt eine Rückschlagventil 7 mit einem Dichtelement in Form einer Dichtkugel 10 im Inneren einer Hülse 11. Die Dichtkugel 10 kann sich in der Hülse 11 zwischen einer als Ventilsitz für die Dichtkugel wirkenden Hülsenverengung 12 und einem am anderen Ende der Hülse 11 liegenden Rückhalt 13 bewegen. Der Rückhalt 13 ist beispielsweise ein die Hülse 11 durchsetzender Steg oder ein Gitter. Liegt die Dichtkugel 10 an der Hülsenverengung 12 an, ist das Rückschlagventil 7 geschlossen, liegt die Dichtkugel 10 am Rückhalt 13 an, ist das Rückschlagventil 7 geöffnet, d.h. eine Durchströmung möglich.

Die Hülse 11 ist bei der in Fig. 2 gezeigten Ausführungsform einfach in die Öffnung 6 der Schwallwand 4 eingepreßt. Alternativ oder zusätzlich kann die Hülse 11 mit der Schwallwand 4 verschweißt werden.

Bei der in Fig. 3 gezeigten zweiten Variante ist die Hülse 11 mit Hilfe eines Flanschringes 14 in der Öffnung 6 der Schwallwand 4 verankert. Der Flanschring 14 liegt dabei mit seinem Flanschteil 15 unter Zwischenschaltungen eines Dichtringes 16 am Rand der Öffnung 6 an und greift mit seinem Ringteil 17 die Öffnung 6 durchsetzend in ein Innengewinde der Hülse 11 ein.

Der Rückhalt 13 wird hier durch den Flanschring 14 gebildet, welcher zu diesem Zweck mit innenseitigen Riefen 18 ausgestattet ist, um eine Dichtanlage der Dichtkugel 10 hier zu verhindern.

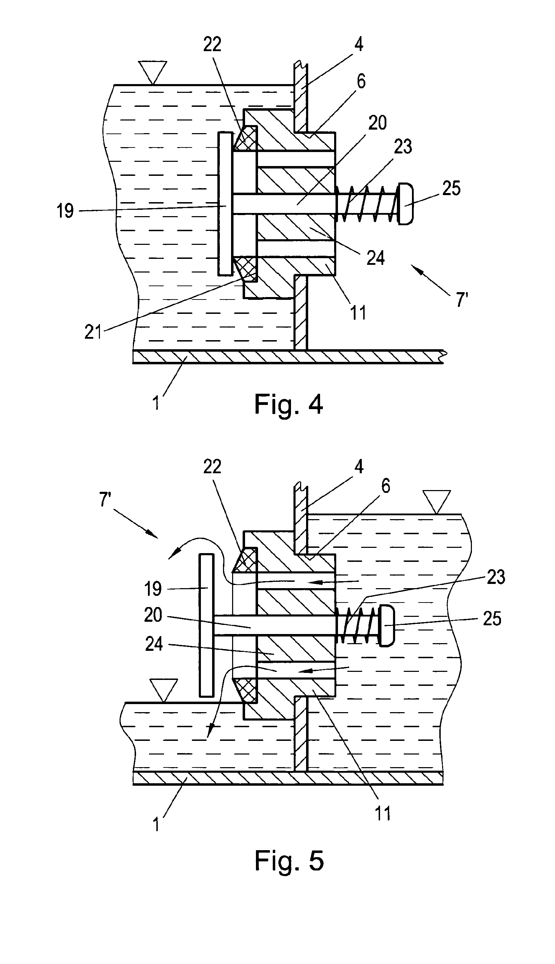

Die Fig. 4 und 5 zeigen eine erfindungsgemäße Ausführungsform des Rückschlagventils 7', bei welcher das Dichtelement ein Ventilteller 19 ist, der von einer in der Hülse 11 axialbeweglich gelagerten Stange 20 mitgeführt ist und gegen die hier als Ventilsitz wirkende Stirnseite 21 der Hülse 11 abdichten kann. Zwischen Ventilteller 19 und Stirnseite 21 kann eine Dichtung 22 vorgesehen sein. Die Dichtung kann auch auf dem Teller 19 montiert bzw. befestigt und vorzugsweise als Lippendichtung ausgeführt sein. Optional kann der Ventilteller 19 durch eine auf die Stange 20 aufgezogene Feder 23 in die Schließstellung vorgespannt werden.

Die Stange 20 ist in dem gezeigten Beispiel in einem zentralen Lagerelement 24 gelagert, welches im Inneren der Hülse 11 z.B. über radiale Speichen (nicht gezeigt) gehalten ist. Das Lagerelement 24 bildet dabei im Zusammenwirken mit einem Endkopf 25 der Stange 20, gegebenenfalls unter Zwischenschaltung der Feder 23, den Rückhalt für den Ventilteller 19 in der Offenstellung von der Fig. 5.

Die Erfindung ist nicht auf die dargestellten Ausführungsformen beschränkt, sondern umfaßt alle Varianten und Modifikationen, die in den Rahmen der anschließenden Ansprüche fallen.

## Patentansprüche

1. Kraftstofftank (1) für ein Fahrzeug, mit mindestens einer Schwallwand (4, 5) in seinem Inneren, die eine mit einem Rückschlagventil (7') versehene Öffnung (6) aufweist, wobei das Rückschlagventil (7') ein Dichtelement (19) aufweist, das sich in einer Hülse (11) zwischen einem Ventilsitz (21) und einem davon entfernten Rückhalt (24) bewegen kann, welche Hülse (11) in oder an der Öffnung (6) verankert ist, **dadurch gekennzeichnet, daß** das Dichtelement ein Ventilteller (19) ist, der von einer in einem Lagerelement (24) der Hülse (11) axialbeweglich gelagerten Stange (20) geführt ist und gegen die als Ventilsitz wirkende Stirnseite (21) der Hülse (11), gegebenenfalls unter Zwischenschaltung einer Dichtung (22), abdichten kann.

2. Kraftstofftank nach Anspruch 1, **dadurch gekennzeichnet, daß** der Ventilteller (19) durch eine auf die Stange (20) aufgezogene Feder (23) in die Schließstellung vorgespannt ist.

3. Kraftstofftank nach Anspruch 1 oder 2, **dadurch gekennzeichnet, daß** die Hülse (11) in die Öffnung (6) eingeschraubt, verschweißt oder eingepreßt ist.
